# EUROPÄISCHE PATENTSCHRIFT

(11) **EP 2 108 119 B1**
(45) Veröffentlichungstag und Bekanntmachung des Hinweises auf die Patenterteilung: **11.01.2012**
(21) Anmeldenummer: 07847270.1
(22) Anmeldetag: 22.11.2007
(51) Int. Cl.: G01N 27/407

(54) **GASSENSOR MIT INNEN LIEGENDER PUMPZELLE**
GAS SENSOR WITH INNER PUMP CELL
CAPTEUR DE GAZ AVEC UNE CELLULE DE POMPAGE SITUÉE À L'INTÉRIEUR

(30) Priorität: 29.12.2006 DE 102006062060
(43) Veröffentlichungstag der Anmeldung: 14.10.2009
(73) Patentinhaber: Robert Bosch GmbH, 70442 Stuttgart (DE)
(72) Erfinder: REINHARDT, Goetz, 71032 Boeblingen (DE); RUNGE, Henrico, 70435 Stuttgart (DE); REINSHAGEN, Holger, 96052 Bamberg (DE); DIEHL, Lothar, 70839 Gerlingen (DE)
(86) Internationale Anmeldenummer: PCT/EP2007/062683
(87) Internationale Veröffentlichungsnummer: WO 2008/080706

(56) Entgegenhaltungen:
- DE-A1- 10 352 797
- DE-A1- 19 938 416
- DE-A1-102004 027 630
- DE-A1-102004 057 687
- US-B1- 6 306 271

## Beschreibung

### Stand der Technik

Die Erfindung geht aus von bekannten Sensorelementen, welche auf elektrolytischen Eigenschaften bestimmter Festkörper beruhen, also der Fähigkeit dieser Festkörper, bestimmte Ionen zu leiten. Derartige Sensorelemente werden insbesondere in Kraftfahrzeugen eingesetzt, um Luft-Kraftstoff-Gasgemischzusammensetzungen zu messen. Insbesondere werden Sensorelemente dieser Art unter der Bezeichnung "Lambdasonde" eingesetzt und spielen eine wesentliche Rolle bei der Reduzierung von Schadstoffen in Abgasen, sowohl in Ottomotoren als auch in der Dieseltechnologie.

Mit der so genannten Luftzahl "Lambda" (λ) wird dabei allgemein in der Verbrennungstechnik das Verhältnis zwischen einer tatsächlich angebotenen Luftmasse und einer für die Verbrennung theoretisch benötigten (d. h. stöchiometrischen) Luftmasse bezeichnet. Die Luftzahl wird dabei mittels eines oder mehrerer Sensorelemente zumeist an einer oder mehreren Stellen im Abgastrakt eines Verbrennungsmotors gemessen. Entsprechend weisen "fette" Gasgemische (d. h. Gasgemische mit einem Kraftstoffüberschuss) eine Luftzahl λ < 1 auf, wohingegen "magere" Gasgemische (d. h. Gasgemische mit einem Kraftstoffunterschuss) eine Luftzahl λ > 1 aufweisen. Neben der Kraftfahrzeugtechnik werden derartige und ähnliche Sensorelemente auch in anderen Bereichen der Technik (insbesondere der Verbrennungstechnik) eingesetzt, beispielsweise in der Luftfahrttechnik oder bei der Regelung von Brennern, z. B. in Heizanlagen oder Kraftwerken. Aus dem Stand der Technik sind zahlreiche verschiedene Ausführungsformen der Sensorelemente bekannt und werden beispielsweise in Robert Bosch GmbH: "Sensoren im Kraftfahrzeug", Juni 2001, S. 112-117 oder in T. Baunach et al.: "Sauberes Abgas durch Keramiksensoren", Physik Journal 5 (2006) Nr. 5, S. 33-38, beschrieben.

Eine Ausführungsform stellt die so genannte "Sprungsonde" dar, deren Messprinzip auf der Messung einer elektrochemischen Potentialdifferenz zwischen einer einem Referenzgas ausgesetzten Referenzelektrode und einer dem zu messenden Gasgemisch ausgesetzten Messelektrode beruht. Referenzelektrode und Messelektrode sind über den Festelektrolyten miteinander verbunden, wobei aufgrund seiner Sauerstoffionen-leitenden Eigenschaften in der Regel Zirkondioxid (z.B. Yttrium-stabilisiertes Zirkondioxid) oder ähnliche Keramiken als Festelektrolyt eingesetzt werden. Theoretisch weist die Potentialdifferenz zwischen den Elektroden gerade beim Übergang zwischen fettem Gasgemisch und magerem Gasgemisch einen charakteristischen Sprung auf, welcher genutzt werden kann, um die Gasgemischzusammensetzung zu messen und/oder zu regeln. Verschiedene Ausführungsbeispiele derartiger Sprungsonden, welche auch als "Nernst-Zellen" bezeichnet werden, sind beispielsweise in DE 10 2004 035 826 A1, DE 199 38 416 A1 und DE 10 2005 027 225 A1 beschrieben.

Alternativ oder zusätzlich zu Sprungsonden kommen auch so genannte "Pumpzellen" zum Einsatz, bei denen eine elektrische "Pumpspannung" an zwei über den Festelektrolyten verbundene Elektroden angelegt wird, wobei der "Pumpstrom" durch die Pumpzelle gemessen wird. Im Unterschied zum Prinzip der Sprungsonden stehen bei Pumpzellen in der Regel beide Elektroden mit dem zu messenden Gasgemisch in Verbindung. Dabei ist eine der beiden Elektroden (zumeist über eine durchlässige Schutzschicht) unmittelbar dem zu messenden Gasgemisch ausgesetzt. Alternativ kann diese Elektrode auch einer Luftreferenz ausgesetzt sein. Die zweite der beiden Elektroden ist jedoch in der Regel derart ausgebildet, dass das Gasgemisch nicht unmittelbar zu dieser Elektrode gelangen kann, sondern zunächst eine so genannte "Diffusionsbarriere" durchdringen muss, um in einen an diese zweite Elektrode angrenzenden Hohlraum zu gelangen. Als Diffusionsbarriere wird zumeist eine poröse keramische Struktur mit gezielt einstellbaren Porenradien verwendet. Tritt mageres Abgas durch diese Diffusionsbarriere hindurch in den Hohlraum ein, so werden mittels der Pumpspannung Sauerstoffmoleküle an der zweiten, negativen Elektrode elektrochemisch zu Sauerstoffionen reduziert, werden durch den Festelektrolyten zur ersten, positiven Elektrode transportiert und dort als freier Sauerstoff wieder abgegeben. Die Sensorelemente werden zumeist im so genannten Grenzstrombetrieb betrieben, das heißt in einem Betrieb, bei welchem die Pumpspannung derart gewählt wird, dass der durch die Diffusionsbarriere eintretende Sauerstoff vollständig zur Gegenelektrode gepumpt wird. In diesem Betrieb ist der Pumpstrom näherungsweise proportional zum Partialdruck des Sauerstoffs im Abgasgemisch, so dass derartige Sensorelemente häufig auch als Proportionalsensoren bezeichnet werden. Im Gegensatz zu Sprungsensoren lassen sich Pumpzellen über einen vergleichsweise weiten Bereich für die Luftzahl Lambda einsetzen, weshalb Pumpzellen insbesondere in so genannten Breitbandsensoren zum Einsatz kommen, um auch bei Gasgemischszusammensetzungen abseits von λ=1 zu messen und/oder zu regeln.

Die oben beschriebenen Sensorprinzipien von Sprungzellen und Pumpzellen lassen sich vorteilhaft auch kombiniert einsetzen, in so genannten "Mehrzellern". So können die Sensorelemente ein oder mehrere nach dem Sprungsensor-Prinzip arbeitende Zellen und ein oder mehrere Pumpzellen enthalten. Ein Beispiel eines "Doppelzellers" ist in EP 0 678 740 B1 beschrieben. Dabei wird mittels einer Nernstzelle der Sauerstoffpartialdruck in dem oben beschriebenen, an die zweite Elektrode angrenzenden Hohlraum einer Pumpzelle gemessen und die Pumpspannung durch eine Regelung so nachgeführt, dass im Hohlraum stets die Bedingung = 1 herrscht. Verschiedene Abwandlungen dieses mehrzelligen Aufbaus sind bekannt.

Die aus dem Stand der Technik bekannten Sensorelemente in Einzeller-Anordnung mit zwei dem Abgas bzw. Messgas ausgesetzten Elektroden zeigen jedoch in vielen Fällen lediglich im mageren Abgas eine eindeutige Kennlinie. Im leicht mageren Bereich, also wenn λ sich dem Wert 1 nähert, ist jedoch in vielen Fällen eine Abweichung der Pumpstrom-Kennlinie vom theoretischen Verlauf zu beobachten. Statt eines Absinkens des Pumpstroms mit kleiner werdenden Lambda-Werten hin zum Wert λ = 1 ist sogar in vielen Fällen ein Anstieg des Pumpstroms zu beobachten. Diese Abweichung bewirkt, dass die Pumpstrom-Kennlinie keinen eindeutigen Verlauf mehr aufweist, aus welchem auf die Luftzahl zurück geschlossen werden kann, Dies macht sich beispielsweise bei Lambdasonden für den Einsatz in Dieselfahrzeugen, bei welchen üblicherweise im leicht mageren Bereich gearbeitet wird, negativ bemerkbar. Weitere Sensorelemente sind aus der US 6 306 271 B1 und der DE 10 2004 057687 bekannt. Die US 6306271B1 offenbart den Oberbegriff des Anspruchs 1.

### Offenbarung der Erfindung

Die Erfindung geht aus von der Kenntnis, dass die Abweichung des Pumpstroms von der erwarteten Kennlinie im leicht mageren und im fetten Bereich auf die Anwesenheit von oxidierbaren Komponenten (Fettgas) in der Umgebung der Anode zurückzuführen ist. In diesem Fall sind anstelle der im Mageren Bereich den Grenzstrom bestimmenden Kathodenreaktiunen Reaktionen an der Anode, welche üblicherweise ebenfalls dem Abgas ausgesetzt ist, entscheidcnd. Diese Anodenreaktionen bewirken ein Stromsignal wie im Magerbetrieb, welches von dem Stromsignal durch die an der Kathode ablaufenden Reaktionen nicht zu unterscheiden ist. Bereits geringe Mengen an Brenngas (also oxidierbare Gaskomponenten, speziell H₂) können das Messsignal beeinflussen, so dass die Eindeutigkeit der Grenzstrom-Kennlinie bereits im Nichtgleichgewichtsabgas (z.B. im Dieselbetrieb) schon nahe bei λ = 1 nicht mehr gegeben ist. Um eine eindeutige Kennlinie eines Sensorelement im Bereich Luft > λ ≥ 1,0 zu realisieren (d.h. insbesondere kein oder nur ein unwesentliches Stromsignal im fetten Bereich), müssen demzufolge die im Fettgas ablaufenden Reaktionen an der Anode, wie

CO + O²⁻ → CO₂ + 2e⁻

H₂ + O²⁻→ H₂O + 2e⁻

unterbunden werden.

Ein wesentlicher Vorteil des erfindungsgemäßen Sensorelements besteht darin, dass mindestens eine zweite Elektrode vorgesehen ist, welche als Anode betrieben wird kann und welche von oxidierbaren Komponenten aus dem Abgas abgeschirmt wird, indem die mindestens eine zweite Elektrode ins Sensorelementinnere verlegt wird. Die Brenngaskonzentrationen im Diesel-Nichtgleichgewichtsabgas nahe λ = 1 und die überschüssigen Brenngase im fetten Abgas können das Lambda-Signal in diesem Falle nicht mehr beeinflussen, da praktisch kein Brenngasumsatz an der mindestens einen zweiten Elektrode mehr erfolgen kann. Es wird daher ein Sensorelement zur Bestimmung mindestens einer physikalischen Eigenschaft eines Gasgemischs in mindestens einem Gasraum vorgeschlagen, beispielsweise ein Sensorelement, welches zum Einsatz als Lambdasonde oder zum Einsatz in einer Lambdasonde geeignet ist. Das Sensorelement weist mindestens eine erste Elektrode, mindestens eine zweite Elektrode und mindestens einen die mindestens eine erste Elektrode und die mindestens eine zweite Elektrode verbindenden Festelektrolyten auf. Bezüglich der möglichen Materialien für die mindestens zwei Elektroden und den mindestens einen Festelektrolyten kann beispielsweise auf den Stand der Technik verwiesen werden. Dabei ist erfindungsgemäß die mindestens eine erste Elektrode und die mindestens eine zweite Elektrode innerhalb des Sensorelements angeordnet, im Gegensatz zu üblichen Pumpzellen-Schichtaufbauten (z.B. der in Robert Bosch GmbH: "Sensoren im Kraftfahrzeug" Juni 2001, Seite 116 beschriebenen Pumpzelle), bei welchen üblicherweise die Anode (direkt oder über eine poröse Schutzschicht) dem Abgas ausgesetzt ist. Unter "im Inneren" ist dabei insbesondere zu verstehen, dass die mindestens eine erste Elektrode und die mindestens eine zweite Elektrode zumindest bereichsweise durch mindestens eine für das Gasgemisch undurchlässige Schicht (beispielsweise eine oder mehrere Festelektrolyt-Schichten) von dem mindestens einen Gasraum getrennt sind. Weiterhin ist mindestens ein Abluftkanal vorgesehen, über welchen die mindestens eine zweite Elektrode mit mindestens einem Referenzgasraum (beispielsweise einem Motorraum eines Kraftfahrzeugs) verbunden ist, welcher von dem mindestens einen Gasraum getrennt ist.

Ein wesentlicher Vorteil der vorgeschlagenen Anordnung besteht darin, dass eine eindeutige Kennlinie im Bereich Luft > λ ≥ 1 realisiert werden kann. Dadurch lässt sich, auch ohne Einsatz komplexer Mehrzeller-Strukturen (welche jedoch gleichwohl realisierbar sind) ein kostengünstiges Sensorelement herstellen, welches auch für den Einsatz in Dieselfahraeugen geeignet ist.

Der mindestens eine Abluftkanal weist erfindungsgemäß destens ein poröses Füllelement auf beispielsweise mindestens ein poröses Füllelement auf Al₂O₃-Basis. Der mindestens eine Abluftkanal kann dabei beispielsweise mindestens eine der folgenden Eigenschaften aufweisen:
- der mindestens eine Abluftkanal weist eine rechteckige Querschnittsfläche auf;
- der mindestens eine Abluftkanal weist eine Länge im Bereich von 5 mm bis 60 mm, vorzugsweise im Bereich von 35 mm bis. 60 mm auf-,
- der mindestens eine Abluftkanal weist eine Querschnittsfläche im Bereich von 5·10³ mm² bis 240·10⁻³ mm², vorzugsweise von 20·10⁻³ mm² bis 120·10⁻³ mm² auf.

Die mindestens eine erste Elektrode kann vorteilhafterweise, wie dies aus dem Stand der Technik bekannt ist, durch mindestens eine Diffusionsbarriere von dem mindestens einen Gasraum getrennt sein. Insbesondere kann es sich bei dieser Difftisionsbarriere beispielsweise um ein poröses, keramisches Material handeln, welches den Nachstrom von Gasgemisch zur mindestens einen ersten Elektrode und somit den Grenzstrom der mindestens einen ersten Elektrode begrenzt. Weiterhin kann, zur Beaufschlagung der mindestens einen ersten Elektrode mit Gasgemisch die mindestens eine erste Elektrode beispielsweise über ein Gaszutrittsloch mit dem mindestens einen Gasraum verbunden sein, wobei das mindestens eine Gaszutrittsloch vorteilhalterweise die oben beschriebenen gasundurchlässigen Schichten, welche die Elektroden von dem mindestens einen Gasraum trennen, durchdringt.

Weiterhin hat es sich als vorteilhaft erwiesen, wenn die mindestens eine erste Elektrode (ggf. in Zusammenwirkung mit der mindestens einen Dithsionsbartiere) und die mindestens eine zweite Elektrode (in Zusammenwirkung mit dem mindestens einen Abluftkanal und ggf. mit dem mindestens einen porösen Füllelement) in ihren Grenzströmen aufeinander abgestimmt sind. Unter einem Grenzstrom bzw. Luftgrenzstrom ist dabei derjenige Strom zu verstehen, welcher bei einer gegebenen Anordnung maximal in Luft in kathodischem Betrieb der jeweiligen Elektrode zu erreichen ist. Dies ist derjenige Strom, der einer Situation entspricht, in welcher alle an der jeweiligen Elektrode ankommenden nachzuweisenden Gasmoleküle unmittelbar durch den Festelektrolyten abtransportiert werden. Erfindungsgemäß ist durch geeignete Dimensionierung und/oder Auswahl des mindestens Abluftkanals und/oder des mindestens einen porösen Füllelements der Grenzstrom der mindestens einen zweiten Elektrode kleiner ausgestaltet als der Grenzstrom der mindestens einen ersten Elektrode. Dies bedeutet, dass die mindestens eine zweite Elektrode besonders wirksam gegenüber eindiffundierenden Verunreinigungen aus dem mindestens einen Referenzgasraum abgeschirmt ist, beispielsweise dort vorhandenen organischen Verunreinigungen, welche an der Anode die oben beschriebenen Fettgasreaktionen (und damit eine Verfälschung des Stromsignals) bewirken könnten. Auch eine Abschirmung der mindestens einen zweiten Elektrode gegenüber anderen Verunreinigungen, welche beispielsweise das Potential der mindestens einen zweiten Elektrode verfälschen könnten, kann durch diese Wahl des Grenzstroms wirksam realisiert werden. So hat es sich insbesondere als vorteilhaft erwiesen, wenn der Grenzstrom der mindestens einen zweiten Elektrode vorzugsweise kleiner ist als 1/50 des Grenzstroms der mindestens einen ersten Elektrode und besonders bevorzugt kleiner als 1/100.

Die oben beschriebene wirksame Abschirmung der mindestens einen ersten Elektrode und der mindestens einen zweiten Elektrode durch Anordnung dieser Elektroden im Sensorinneren lässt sich vorteilhaft dadurch verbessern, dass weiterhin mindestens eine Reduzierelektrode in das Sensorelement integriert wird. Diese mindestens eine Redurierelekirode ist vorteilhafterweise in einer Schichtebene angeordnet (bzw. in mehreren Schichtebenen), welche nicht einer Schichtcbcnc entspricht, in der die mindestens eine erste Elektrode und/oder die mindestens eine zweite Elektrode angeordnet sind. Mittels der mindestens einen Reduzierelektrode lassen sich Nachteile vermeiden, welche insbesondere mit einem Aufbau von nebeneinander liegenden Elektroden verbunden sind. Diese Nachteile bestehen insbesondere darin, dass bei nebeneinander liegender erster Elektrode und zweiter Elektrode in der Regel ein erhöhter Innenwiderstand auftritt und die Stromdichte über der Elektrode inhomogen verteilt ist. Die mindestens eine Reduzierelektrode, welche vorteilhafterweise die mindestens eine erste Elektrode und/oder die mindestens eine zweite Elektrode ganz oder teilweise überlappt, sorgt für eine "Umleitung" des Stroms durch den mindestens einen Festelektrolyten und damit mittels einer Verkürzung der Abstände zu einer erheblichen Reduzierung des Innenwiderstands und somit zu verminderten Pumpspannungen. Verschiedene Arten des Schichtaufbaus sind realisierbar. Auch lässt sich die mindestens eine Reduzierelektrode, welche vorteilhafterweise als "Floating"-Elektrode (nicht kontaktiert) ausgestaltet ist, einsetzen, um den Innenwiderstand des Sensorelements bei der Herstellung zu "trimmen", wobei mittels eines entsprechenden Schneid- und/oder Ablationsverfahrens die Form und/oder die Größe der mindestens einen Reduzierelektrode solange angepasst wird, bis der Innenwiderstand des Sensorelements einen gewünschten Wert erreicht. Auf diese Weise lässt sich ein sicheres, kostengünstiges Herstellungsverfahren eines Sensorelements realisieren, sowie eine hohe Präzision der auf diese Weise hergestellten Sensorelemente.

Das beschrieben Sensorelement lässt sich derart (beispielsweise mittels einer in das Sensorelement integrierten und/oder externen elektronischen Beschaltung) betreiben, dass zwischen die mindestens eine erste Elektrode und die mindestens eine zweite Elektrode eine Pumpspannung, insbesondere zwischen 100 mV und 1,0 V, vorzugsweise zwischen 300 mV und 600 mV und besonders bevorzugt zwischen 600 mV und 700 mV angelegt wird, wobei mindestens ein Pumpstrom gemessen wird, welcher zwischen der mindestens einen ersten Elektrode und der mindestens einen zweiten Elektrode fließt. Dabei wird die mindestens eine erste Elektrode als Pumpkathode geschaltet, und die mindestens eine zweite Elektrode als Pumpanode.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine Pumpstrom-Kennlinie;
- Figur 2: einen Schichtaufhau eines als Einzeller gestalteten Sensorelements mit innen liegender Pumpkathode und innen liegender Pumpanode und übereinander liegenden Zuleitungen;
- Figur 3: ein Sensorelement gemäß Figur 3, jedoch mit nebeneinander liegenden Zuleitungen;
- Figur 4A: einen dem Stand der Technik entsprechenden Aufbau einer Breitbandsonde;
- Figur 4B: ein Beispiel eines als Magersonde ausgestalteten Sensorelements;
- Figur 5: ein Sensorelement mit Reduzierschicht;
- Figur 6: das Sensorelement gesäß Figur 5 mit zusätzlich einer Schutzschicht;
- Figur 7: ein Verfahren zum Abgleich des Inaunwiderstwides des Sensorelements gemäß Figur 5;
- Figur 8: ein Sensorelement mit innen liegender, auf einem Heizelement angeordneter Reduzierelektrode, als ein Ausführbeispeil der Erfindung
- Figur 9: ein Sensorelemente gemäß Figur 8 mit kombinierter Reduzierelektrode und Ausbauelektrode, als ein weiteres Ausführbeispiel der Erfindung.

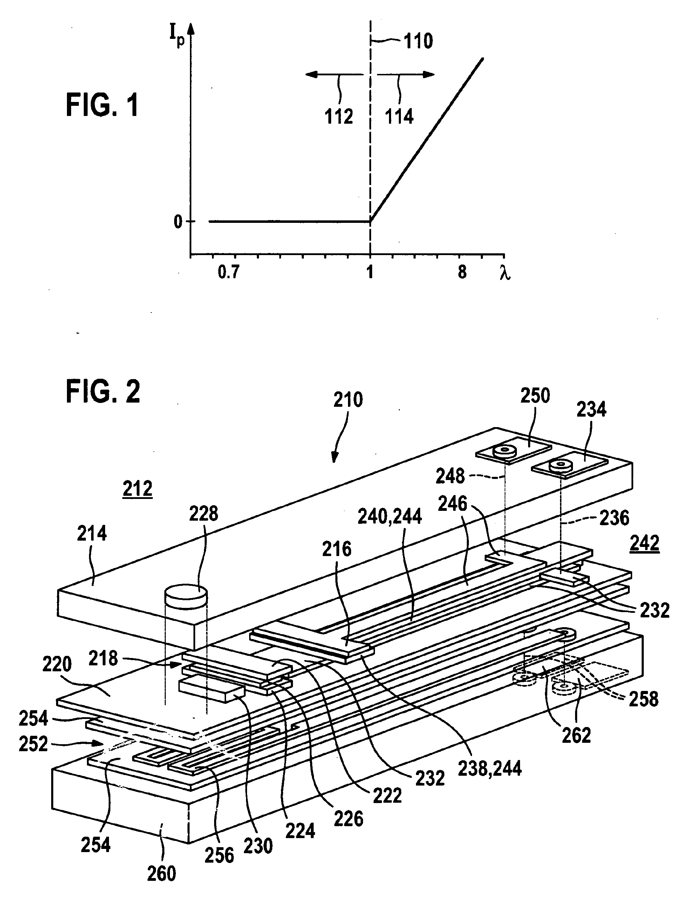

In der Figur 1 ist schematisch ein Verlauf eines Pumpstroms lₚ als Funktion der Luftzahl λ eines Gasgemisches dargestellt. Dabei handelt es sich um den erwarteten Verlauf der Kennlinie für ein erfindungsgemäßes Design eines Sensorelements mit einer Pumpanode, welche vollständig gegenüber dem Brenngas abgeschinnt ist. Die senkrechte gestrichelte Linie 110 bezeichnet dabei den Wert λ = 1, welcher den fetten Bereich 112 vom mageren Bereich 114 trennt. Dabei ist zu erkennen, dass die zu erwartende Kennlinie im Bereich λ > 1 linear ansteigt und im fetten Bereich, also für λ < 1, den Wert 0 annimmt.

Wäre die Pumpanode nicht, wie die Erfindung vorschlägt, gegenüber dem Brenngas abgeschirmt, so wäre insbesondere im fetten Bereich 112 ein nicht-verschwindender Pumpstrom zu beobachten, welcher auf die oben beschriebenen Fettgasreaktionen an der Pumpanode zurückzuführen ist. Bereits im leicht mageren Bereich, also im Bereich 114 nahe bei λ - 1, wäre ein Abweichung vom linearen Verlauf der Kennlinie zu beobachten.

In Figur 2 ist ein Sensorelement 210 in perspektivischer Darstellung des Schichtaufbaus dargestellt. Bei diesem Sensorelement 210 handelt es sich um einen Einzeller, welcher vergleichsweise einfach und kostengünstig zu realisieren ist. Das beschriebene Sensorelement kann beispielsweise als Grenzstrom-Magersonde eingesetzt werden, um Gasgemisch in einem Gasraum 212 zu analysieren.

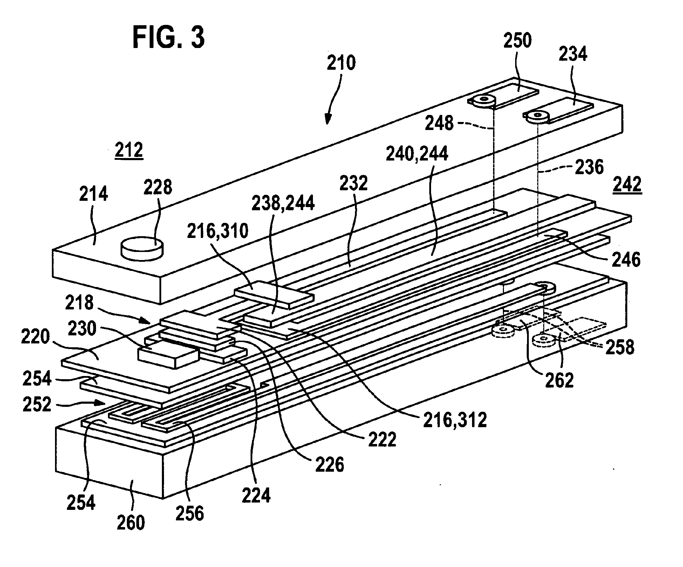

Das Sensorelement 210 weist auf der dem Gasraum 212 zugewandten Seite einen ersten Festelektrolyten 214, beispielsweise einen Yttrium-stabilisierten Zirkondioxid-Elektrolyten, auf. In einer Schichtebene, auf der dem Gasraum 212 abgewandten Seite des Festelektrolyten 214 ist der Festelecktrolyt 214 durch eine Pumpanode 216 (beispielsweise eine Platin-Elektrode und/oder eine Oxidelektrode) und eine Pumpkathode 218 kontaktiert, wobei Pumpanode 216 und Pumpkathode 218 nebeneinander angeordnet sind. Wie oben beschrieben, ist also in diesem wie auch in den folgenden Ausführungsbeispielen die mindestens eine erste Elektrode als Pumpkathode (218) geschaltet und die mindestens eine zweite Elektrode als Pumpanodc (216). Wie ebenfalls oben beschrieben, sind jedoch auch andere Arten der Schaltung denkbar, beispielsweise eine zumindest kurzfristige Umpolung. Unterhalb von Pumpanode 216 und Pumpkathode 218 ist ein zweiter Festelektrolyt 220 angeordnet, so dass Pumpanodc 216 und Pumpkathode 218 zwischen den beiden Festelektrolyten 214, 220 eingebettet sind. Während die Pumpanode 216 dabei lediglich als einzelne Elektrode ausgebildet ist, weist die Pumpkathode 218 in diesem Ausführungsbeispiel optional eine erste Teilkathode 222 und eine zweite Teilkathode 224 auf, wobei die erste Teilkathode 222 den oben liegenden Festelektrolyten 214 kontaktiert, und die zweite Teilkathode 224 den unten liegenden, zweiten Festelektrolyten 220. Die beiden Teilkathoden 222, 224 sind jedoch elektrisch leitend verbunden, so dass diese als einzelne Pumpkathode 218 wirken, jedoch mit vergrößerter Oberfläche. Hierdurch lässt sich der Innenwiderstand des Sensorelements 210 reduzieren. Optional kann auch die Pumpanode 216 als Doppelelektrode ausgeführt sein (vgl. z.B. die Ausführung in Figur 3 unten).

Zwischen den beiden Teilkathoden 222, 224 ist ein Kathodenhohlraum 226 vorgesehen. Über ein Gaszutrittsloch 228 im oben liegenden Festelektrolyten 214 kann Gasgemisch aus dem Gasraum 212 in den Kathodenhohlraum 226 eindringen. Dabei ist zwischen Gaszutrittsloch 228 und Kathodenhohlraum 226 eine Diffusionsbarriere 230 vorgesehen, welche, wie oben beschrieben, ein poröses keramisches Material aufweist und welche den Grenzstrom der Pumpkathode 218 begrenzt. Die Pumpkathode 218 wird durch eine Kathodenzuleitung 232, welche auf dem unteren Festelektrolyten 220 angeordnet ist, elektrisch kontaktiert. Über einen Kathodenanschluss 234 auf der Oberseite des Festelektrolyten 214 und eine elektrische Durchkontaktierung 236 kann die Pumpkathode 218 mit einer entsprechenden elektronischen Schaltung (in Figur 2 nicht dargestellt) verbunden werden und beispielsweise mit einer Spannung beaufschlagt werden.

Unterhalb der Pumpanode 216 ist ein Anodenhohlraum 238 vorgesehen, welcher über einen Abluftkanal 240 mit einem vom Gasraum 212 getrennten Referenzgasraum 242 verbunden ist. Anodenhohlraum 238 und Abluftkanal 240 sind dabei mit einem Sauerstoff-durchlässigen porösen Füllelement 244 auf Al₂O₃-Basis gefüllt. Die Pumpanode 216 ist über eine Anodenzuleitung 246 elektrisch kontaktiert und über eine weitere elektrische Durchkontaktierung 248 im Festelektrolyten 214 mit einem auf der Oberseite des Festelektrolyten 214 angeordneten Anodenanschluss 250 verbunden. Über diesen Anodenanschluss 250 kann die Pumpanode 216 beispielsweise mit der oben beschriebenen elektronischen Vorrichtung verbunden werden, so dass beispielsweise zwischen Pumpanode 216 und Pumpkathode 218 eine Spannung angelegt werden kann und/oder ein Pumpstrom gemessen werden kann. Anodenzuleitung 246 und Kathodenzuleitung 232 sind dabei in dem Ausführungsbeispiel gemäß Figur 2 übereinander liegend angeordnet. Eine elektrische Isolierung von Pumpanode 216 bzw. Anodenzuleitung 246 gegenüber der Kathodenzuleitung 232 erfolgt dabei durch das poröse Füllelement 244, welches elektrisch nichtleitende Eigenschaften aufweist.

Unterhalb des zweiten Festelektrolyten 220 ist ein Heizelement 252 angeordnet, welches ein zwischen zwei Isolatorfolien 254 eingebettetes Heizwiderstandselement 256 umfasst. Das Heizwiderstandselement 256 kann über Durchkontaktierungen 258 in einem Trägersubstrat 260 (beispielsweise wieder ein Festelektrolyt) über Heizanschlüsse 262 auf der dem Gasraum 212 abgewandten Seite des Trägersubstrats 260 elektrisch kontaktiert und mit einem Heizstrom beaufschlagt werden. Beispielsweise kann dieser Heizstrom mit einer Regelung geregelt werden, welche beispielsweise einen konstanten Innenwiderstand des Sensorelements 210 einstellt.

Mittels des in Figur 2 beschriebenen Ausführungsbeispiels eines Sensorelements 210 kann die in Figur 1 dargestellte Pumpstrom-Kennlinie im Wesentlichen realisiert werden. Beim Einsatz als Lambdasonde wird dabei im mageren Bereich 114 ein Pumpstrom entsprechend des Sauerstoffpartialdrucks gemessen, im fetten Bereich 112 kein Strom, da kein freier Sauerstoff vorliegt und die gewählte Pumpspannung vorteilhafterweise unterhalb der Zersetzungsspannung des Wassers liegt. Somit kann keine Brenngasoxidation an der innen liegenden, abgeschirmten Brenngas-blinden Pumpanode 216 auftreten. Dadurch lässt sich ein kostengünstiges, als Einzeller aufgebautes Sensorelement 210 realisieren, welches auch für den Einsatz in Dieselfahrzeugen geeignet ist.

In Figur 3 ist ein Sensorelement 210 in perspektivischer Schichtdarstellung gezeigt. Der Aufbau entspricht weitgehend dem gemäß Figur 2, so dass bezüglich der einzelnen Elemente auf dieser verwiesen werden kann. Im Gegensatz zum Sensorelement 210 gemäß Figur 2 weist jedoch im Sensorelement 210 gemäß Figur 3 nicht nur die Pumpkathode 218 zwei Teilkathoden 222, 224 auf, sondern auch die Pumpanode 216 ist zweiteilig ausgebildet, mit einer oben liegenden ersten Teilanode 310, welche den oberen Festelelekrolyten 214 kontaktiert, und einer unten liegenden zweiten Tcilanodc 312, welche den unten liegenden Festelektrolyten 220 kontaktiert. Die Teilanoden 310, 312 sind wiederum, analog zu den Teilkathoden 222, 224, elektrisch leitend miteinander verbunden. Der Vorteil dieser Anordnung besteht, wie oben ausgeführt, in einer Verringerung des Innenwiderstands des Sensorelements 210, da nunmehr wirksam Pumpströme durch den oberen Festelektrolyten 214 und den unteren Festelektrolyten 220 geleitet werden können.

Die beiden Teilanoden 310, 312 sind durch den Anodenhohlraum 238 voneinander getrennt, welcher wiederum, analog zu Figur 3, mit dem porösen Füllelement 244 aufgefüllt ist. Analog zu Figur 2 ist der Anodenhohlraum 238 auch im Ausführungsbeispiel gemäß Figur 3 über den Abluftkanal 240, welcher ebenfalls mit dem porösen Füllelement 244 ausgefüllt ist, mit dem Referenzgasraum 242 verbunden.

Ebenfalls im Unterschied zum Sensorelement 210 gemäß Figur 2 ist im Sensorelement 210 gemäß Figur 3 auch keine übereinander liegende Anordnung der Elektrodenzuleitungen 232, 246 vorgesehen, mittels derer die Pumpkathode 218 und die Pumpanode 216 kontaktiert werden. Anodenzuleitung 246 und Kathodenzulcitung 232 sind vielmehr nebeneinander liegend auf dem unteren Festelektrolyten 220 angeordnet, wobei der Abluftkanal 240 mittig zwischen den beiden Elektrodenzuleitungen 232, 246 und parallel zu diesen verläuft. Die Kontaktierung der Elektrodenzulcitungen 232, 246 erfolgt, analog zu Figur 2, über die Elektrodenanschlüsse 234, 250. Für die weiteren Bauelemente und die Funktionsweise sei auf die obige Beschreibung verwiesen.

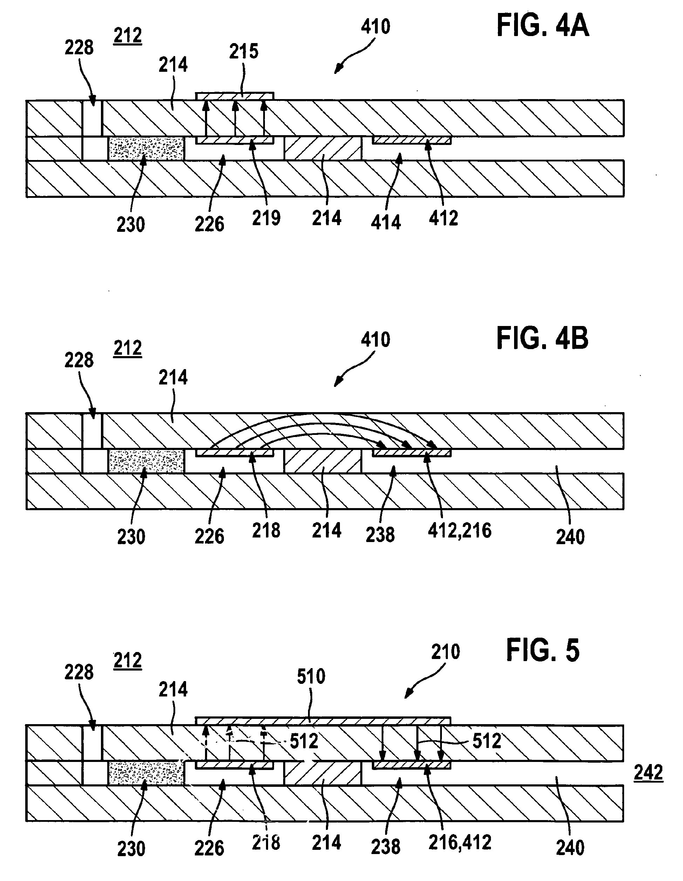

In vielen Fällen weisen Bauelemente mit nebeneinander liegenden Elektroden einen erheblichen Innenwiderstand auf, welcher häufig hohe Pumpspannungen erforderlich macht, was wiederum mit dem erhöhten Risiko einer Zersetzung von Wasser an der Anode verbunden ist. Die Problematik des erhöhten Innenwiderstandes sei an zwei Sensorelementen 410, die in den Figuren 4A und 4B dargestellt sind, beschrieben. Dabei ist in Figur 4A ein Aufbau dargestellt, welcher aus dem Stand der Technik bekannt ist und bei welchem, analog zu den Ausführungsbeispielen in den Figuren 2 und 3, ein Nachtransport von Sauerstoff aus dem Gasraum 212 in den Elektrodenhohlraum 226 vor der Pumpelektrode 219 (welche in der Regel auch als "innere Pumpelektrode", IPE) bezeichnet wird, gehemmt ist. Auf der außen liegenden, dem Gasraum 212 zugewandten Seite des Festelektrolyten 214 ist, der IPE 219 gegenüber liegend, die Gegenelektrode 215 angeordnet. Diese Gegenelektrode 215 wird häufig auch als "äußere Pumpelektrodeelektrode", APE, bezeichnet. Wie oben beschrieben, kann die Polarität zwischen Pumpkathode 219 und Pumpanode 215 im Regelbetrieb auch gewechselt werden, so dass der Regriff "Pumpelektrode" ohne Unterscheidung der Polaritäten einzusetzen wäre. Das Signal des Sensorelements 410 ist der zwischen den beiden Pumpelektroden 215, 219 fließende Sauerstoffstrom.

Weiterhin ist eine Referenzelektrode 412 vorgesehen, welche in einem vom IPE-Hohlraum 226 getrennten Luftreferenzraum 414 (bzw. einem Luftreferenzkanal) angeordnet ist. Die Pumpspannung zwischen den beiden Pumpelektroden 215, 219 wird dabei derart geregelt, das zwischen der IPE 219 und der Referenzelektrode 412 eine bestimmte Spannung anliegt (Nernst-Spannung). Diese Regelspannung wird dabei so gewählt, dass im IPE-Hohlraum 226 im Wesentlichen ein stöchiometrisches Gemisch vorliegt, d.h. eine Mischung mit λ, - I. Dazu wird in mageren Gasgemischen Sauerstoff aus dem Hohlraum herausgepumpt, während in fetten Gasgemischen Sauerstoff in den Hohlraum hinein gepumpt wird, um die ankommenden Fettkomponenten zu verbrennen. Entsprechen wird die Polarität der Spannung zwischen IPE 219 und APE 215 gewählt. Die Stromrichtung hat beim Übergang von fetten Gasgemischen zu mageren Gasgemischen einen Vorzeichenwechsel und kann eindeutig über den gesamten Bereich von λ gemessen werden.

Für Anwendungen im mageren Bereich, d.h. für λ > 1, kann ein einfacherer Aufbau als in Figur 4A dargestellt gewählt werden, welcher in Figur 4B gezeigt ist. Bei dem dargestellten Sensorelement 410 ist die äußere Pumpelektrode und damit ein Anschlusskontakt entfallen. Der Sauerstoff wird dabei von der inneren Pumpelektrode (Pumpkathode 218) zur Ausbauelektrode bzw- Referenzelektrode 412 gepumpt, welche somit gleichzeitig als Pumpanode 216 fungiert. Wichtig ist dabei, dass die Gaszusammensetzung an der Referenzelektrode 412 im Betrieb nur unwesentlich variiert, so dass unerwünschte Nebenreaktionen an der Pumpkathode 218 vermieden werden. Mit diesem Betrieb lässt sich eine eindeutige Kennlinie für λ > 1 erreichen.

Damit entspricht das in Figur 4B dargestellte Sensorelement 410 bereits dem Sensorelement gemäß einem der Beispiele in den Figuren 2 oder 3, da hier bereits nebeneinander liegende Elektroden 216, 218 im Inneren des Sensorelements 410 realisiert sind. Die nebeneinander liegende Elektrodenanordnung gemäß Figur 4B ist fertigungstechnisch vergleichsweise einfach zu realisieren. Diese Elektrodenanordnung weist jedoch den Nachteil auf, dass durch die seitlich versetzten Elektroden 216, 218 der elektrische Widerstand des Festelektrolyten 214 wesentlich höher ist als bei der Anordnung gemäß dem Stand der Technik in Figur 4A mit ühereinander liegenden Pumpelektroden 216, 218. Speziell in sauerstoffreichen Gasen (z.B. Luft) fließen vergleichsweise hohe Ströme, die über das Ohmsche Gesetz zu vergleichsweise hohen Spannungsverlusten im Feslelektrolylen 214 (z.B. einer ZrO₂-Keramik) und den Elektroden führen. Es müssen deshalb hohe Pumpspannungen zwischen die Elektroden 216, 218 angelegt werden, welche jedoch wiederum dazu führen, dass nahe bei λ = 1 Sauerstoff nicht nur aus den Sauerstoffmolekülen des Gasgemischs aus dem Gasraum 228, sondern auch durch Zersetzung von Wasser und Kohlenstoffdioxid gewonnen wird und als entsprechender Pumpstrom angezeigt wird. Diese Querempfindlichkeit ist ein Grund dafür, dass selbst bei einer Anordnung gemäß Figur 4B mit vollständig abgeschirmter Anode 216 im mageren Bereich bei einer Annäherung an λ - I in vielen Fällen eine Verfälschung der Pumpstrom-Kennlinic zu verzeichnen ist. Die Kennlinie ist daher in der Regel aufgrund der abgeschirmten Pumpanode 216 zwar eindeutig, weist jedoch nahe bei λ-1 eine erhöhte Toleranz auf. In den Figuren 5 bis 9 sind daher weiter verbesserte Ausführungsförmen von Sensorelementen 210 dargestellt, welche die beschriebene Innenwiderstands-Problematik wirksam vermeiden. Eine Grundidee beruht dabei auf dem Einsätz mindestens einer Reduzierelektrode 510, welche jeweils auf einer Seite des Festelektrolyten 214 angeordnet ist, die der Seite gegenüber liegt, auf welcher die Pumpkathode 218 und die Pumpanode 216 angeordnet sind. Auf diese Weise werden die Strompfade erheblich verkürzt und dadurch der Innenwiderstand reduziert.

In den Figuren 5 bis 7 sind dabei Sensorelemente 210 dargestellt, bei welchen die Reduzierelektrode 510 auf der dem Gasraum 212 zugewandten Seite des oberen Festelektrolyten 214 angeordnet ist, wohingegen Pumpanodc 216 und Pumpkathode 218 nebeneinander liegend auf der dem Gasraum 212 abgewandten Seite des Festelektrolyten 214 angeordnet sind. Die Reduzierelektrode 510 ist dabei elektrisch nicht kontaktiert (engl. "Floating"), so dass der Vorteil von nur zwei Flektrodenanschlüssen 234, 250 (Vergleiche die Figuren 2 und 3) erhalten bleibt. In sauerstoffreichen Gasen wird dadurch ein zusätzlicher Strompfad erschlossen. Der Sauerstoffstrom, welcher in den Figuren 5 bis 7 symbolisch mit 512 bezeichnet ist, fließt zunächst von der Pumpkathode 218 (innere Pumpelektrode, IPE) zur Reduzierelektrode 510 und entweicht dort als Sauerstoff. An einer anderen Stelle der Reduzierelektrode 510 wird wieder Sauerstoff eingebaut und fließt zur Pumpanode 216 (welche die Funktion der Referenzelektrode 412 übernommen hat). Durch die Reduzierelektrode 510 lässt sich der Festelektrolyt-Widerstand typischerweise um einen Faktor 2 bis 3 gegenüber der Anordnung gemäß Figur 4B ohne Referenzelektrode 412 erniedrigen. Er kommt damit in den Bereich der Anordnung gemäß Figur 4A. Die Größe der Reduzierelektrode 510 in dem Ausführungsbeispiel gemäß Figur 5 ist dabei so gewählt, dass eine Projektion der Reduzierelektrode 510 in die Ebene der Pumpkathode 218 bzw. Pumpanode 216 beide Elektroden 216, 218 abdeckt. Auch andere Formen von Reduzierelektroden 510 können gewählt werden.

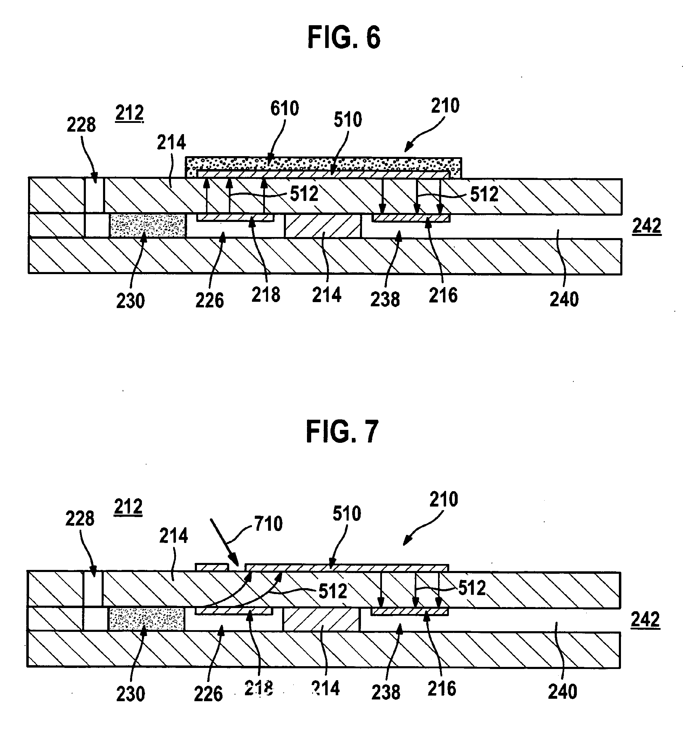

In Figur 6 ist das Sensorelement 210 gemäß Figur 5 in einer leicht modifizierten Ausführung dargestellt. Dabei ist die Reduzierelektrode 510, welche ebenfalls auf der dem Gasraum 212 zugewandten Seite des Festelektrolyten angeordnet ist, vom Gasraum 212 durch eine poröse Schutzschicht 610 abgeschirmt. Diese poröse Schutzschicht 610, für welche beispielsweise übliche APE-Abschirmungs-Materialien eingesetzt werden können, ermöglicht zum einen ein Abströmen freigesetzter Sauerstoffmoleküle oberhalb der Pumpkathode 218 in den Gasraum 212. Im Bereich oberhalb der Pumpanode 216 ermöglicht die poröse Schutzschicht 610 in umgekehrter Weise ein Eindringen von Sauerstoff und somit wiederum einen Einbau von Sauerstoffionen in den Festelektrolyten 214. Ansonsten entspricht das Ausführungsbeispiel des Sensorelements 210 gemäß Figur 6 dem Aufbau in Figur 5. Die Schutzschicht 610 verhindert weiterhin eine verstärkte Alterung der Elektrode 510 durch Asche und Elektrodengifte im Abgas. Der Grenzstrom der Schutzschicht 610 sollte dabei vorzugsweise höher sein als der Grenzstrom der Diffusionsbarriere 230.

In Figur 7 ist das Sensorelement 210 gemäß Figur 5 in leicht modifizierter Weise dargestellt, wobei gleichzeitig ein Vorteil der Verwendung einer Reduzierelektrode 510 beschrieben wird. So ist ein Verfahren zur Hetstellung des Sensorelements 210 beschrieben, bei welchem die Größe und/oder Form der Reduzierelektrode 510 nachträglich (oder während eines Herstellungsschritts) abgeglichen wird. Dabei wird in diesem Ausführungsbeispiel ein Laserschneideverfahren mittels eines Laserstrahls 710 eingesetzt. Beispielsweise kann hierfür ein gepulster Nd:YAG-Laser verwendet werden. Auch andere Arten von Lasern sind einsetzbar, beispielsweise Gaslaser, sowohl im gepulsten als auch im kontinuierlichen Betrieb.

Das Verfahren beruht darauf, dass die Temperaturregelung mittels des Heizelements 252 (welches in den Figuren 4A bis 7 zur Vereinfachung nicht dargestellt ist), üblicherweise über den bei hoher Frequenz gemessenen Innenwiderstand des Festelektrolyten 214 erfolgt. Bei diesen Frequenzen (typischerweise 1 bis 10 kHz, vorzugsweise ca. 3 kHz) werden die Elektrodenwiderstände über die hohen Kapazitäten kurzgeschlossen. Durch Anpassung der durchkontaktierten Reduzierelektrode 510 mittels des Laserschnitts kann der Festelektrolyt-Widerstand bzw. der Innenwiderstand des Sensorelements 210 nachträglich angepasst werden. Dadurch kann die Tempemturstreuung der auf einen konstanten Innenwiderstand geregelten Sensorelemente 210 stark verringert werden.

Nach dem in Figur 7 dargestellten Laserabgleich können weitere Herstellungsschritte erfolgen, so dass beispielsweise auf eine derart abgeglichene Reduzierelektrode 510 Wiederum, analog zu Figur 6, eine poröse Schutzschicht 610 aufgebracht werden kann. Auch vor den dargestelltcn Schritten und zwischen den Schritten können weitere Verfahrensschritte eingeschoben werden, und es lassen sich Verfahrensschritte wiederholt durchführen. Auf diese Weise lassen sich hochpräzise Sensorelemente 210 auf kostengünstige Weise herstellen, welche beispielsweise auch für Dieselanwendungen geeignet sind.

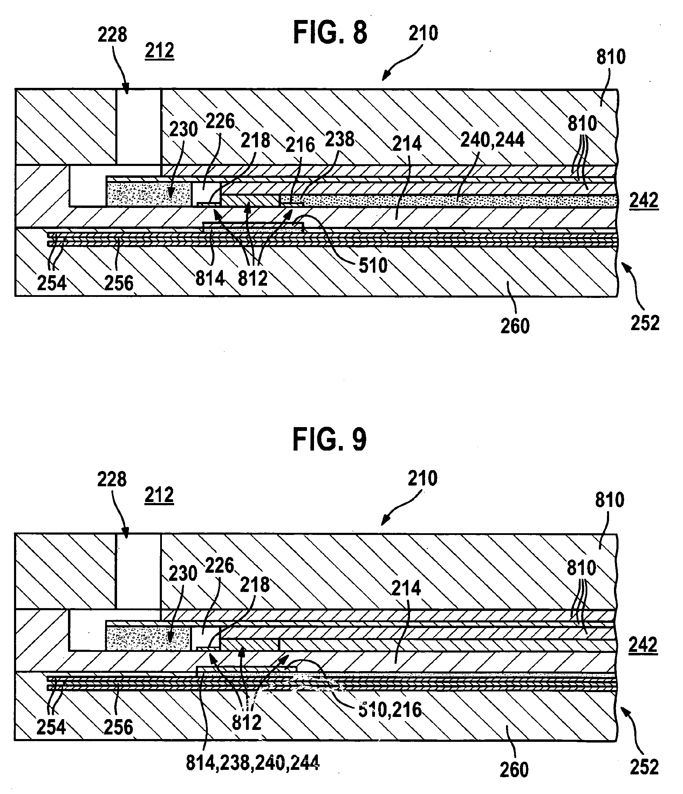

In Figur 8 ist als ein Ausführungsbeispiel der Erfindung ein Sensorelements 210 dargestellt, welches einerseits den Grundgedanken innen liegender Pumpelecktroden 216, 218 und andererseits den Gedanken der Reduzierelektrode 510 weiterentwickelt. Wiederum ist dabei eine Pumpkathode 218 mit einem Kathodenhohlraum 226 vorgesehen, sowie eine parallel zur Pumpkathode 218 angeordnete Pumpanode 216 mit einem Anodenhohlraum 238. Der Anodenhohlraum 238 steht wiederum über einen Abluftkanal 240 mit einem Referenzgasraum 242 in Verbindung. Beispielsweise können Anodenhohlraum 238 und Abluftkanal 240 wieder mit einem porösen Füllelemeint 244 gefüllt sein. Pumpkathode 218 und Pumpanode 216 sind dabei nebeneinander liegend auf einem Festelektrolyten 214 angeordnet. Der Kathodenhohlraum 226 steht wiederum über eine Diffusionsbarriere 230 und ein Gaszutrittsloch 228 mit dem Gasraum 212 in Verbindung, in welchem sich die zu analysierende Gasgernischzuzammensetzung befindet. Insofern kann hinsichtlich der Funktionsweise des Sensorelements 210 sowie dessen Aufbau weitgehend auf die obigen Ausführungsbeispiele, beilspielsweise gemäß den Figuren 2 und 3, verwiesen werden.

Wiederum ist auf einer den Elektrode 216, 218 gegenüber liegenden Seite des Festelektrolyten 214 eine Reduzierelektrode 510 vorgesehen, analog zu den obigen Ausfuhrungsbcispielen gemäß den Figuren 5 bis 7. Im Gegensatz zu den oben aufgezeigten Ausführungsbeispielen ist die Reduzierelektrode 510 jedoch im Ausführungsbeispiel gemäß Figur 8 im Inneren des Sensorelements 210, auf einer dem Gasraum 212 abgewandten Seite des Festelektrolyten 214 angeordnet. Diese Reduzierelektrode 510 ist in unmittelbarer Nähe des Heizelements 252, welches analog zu den oben beschrieben Ausführungsbeispielen gemäß den Figuren 2 und 3 ausgestaltet sein kann. Aufgrund dieser unmittelbar benachbarten Anordnung kann die Reduzierelektrode 510 eine höhere Temperatur aufweisen (typischerweise werden Betriebstemperaturen von ca. 780°C eingesetzt) als bei einer Anordnung der Reduzierelektrode 510 auf der Oberseite des Festelektrolyten 214. Dadurch werden die elektrische Leitfähigkeit und die Kinetik der Reduzierelektrode (dies bedeutet insbesondere einen Ausbau bzw. Einbau von Sauerstoff) wesentlich erhöht.

Ein weiterer Vorteil der Ausgestaltung gemäß Figur 8 ergibt sich daraus, dass die mechanische Stabilität des Sensorelements 210 gemäß Figur 8 im Wesentlichen durch zusätzliche Trägerschichten 810 realisiert wird, welche in Materialauswahl und Eigenschaften unterschiedlich ausgestaltet sein können. Beispielsweise können hierzu wiederum Folien, beispielsweise Elektrolytfolien vorgesehen werden, wie beispielsweise auch in den oben beschriebenen Ausführungsbeispielen. Auch können Zwischenfolien verwendet werden, beispielsweise um die Diffusionsbarriere 230 und den Kathodenhohlraum 226 wirksam gegenüber dem Gasraum 212 abzuschirmen. Der eigentliche Festelektrolyt 214 hingegen kann als Folie und/oder auch als (beispielsweise keramische) Druckschicht aufgebracht werden, oder mittels anderer Schichttechnologien, welche einen exakt einstellbaren, geringen Abstand zwischen Reduzierelektrode 510 und den Elektroden 216, 218 ermöglichen. Auf diese Weise lässt sich der elektrische Widerstand der sich aus Festelektrolyt 214 und Elektroden 216, 218 zusammensetzenden Pumpzelle 812 stärker reduzieren als bei der Anordnung der Reduzierelektrode 510 auf der Oberseite des Sensorelements 210, bei welcher die Reduzierelektrode 510 in der Regel durch eine Elektrolytfolie von den Pumpelektroden 216, 218 getrennt ist.

Ein weiterer Vorteil der Anordnung gemäß Figur 8 besteht darin, dass die Wirksamkeit der Reduzierelektrode 510 nicht durch Abgase beeinflusst ist. Zu diesem Zweck kann, wie in Figur 8 dargestellt, beispielsweise zwischen Reduzierelektrode 510 und Heizelement 252 ein Gaspufferraum 814 vorgesehen sein. Dieser Gaspufferraum 814 kann beispielsweise wiederum als Hohlraum ausgestaltet sein und/oder mit einem porösen Material gefüllt sein. Der Gaspufferraum 814 ermöglicht jeweils lokal einen Sauerstoffausbau bzw. Sauerstoffeinbau an der Reduzierelektrode 510. Vorzugsweise ist dieser Gaspufferraum 814 vollständig abgeschirmt, beispielsweise gegenüber dem Gasraum 212 und/oder dem Referenzgasraum 242. Auf diese Weise bleibt insbesondere das Potential der Reduzierelektrode 510 unberührt von der Abgaszusammensetzung, und die Reduzierelektrode 510 ist weitgehend vergiftungsresistent. Durch die Abschirmung der Reduzierelektrode 510 vom Gasgemisch können außerdem Redoxinstabile Alternativelektroden zu den üblicherweise verwendeten Platin-Elektroden eingesetzt werden, wie beispielsweise leitfähige Oxide, beispielsweise LSM-Perovskite (LSM: Lanthan Strontium Manganat) oder ähnliche Materialien.

Weiterhin sei noch die Möglichkeit erwähnt, die Reduzierelektrode 510 und die Ausbauelektrode 216 zu kombinieren. Durch eine elektrische Kontaktierung der Reduzierelektrode 510 und die Anknüpfung der Reduzierelektrode 510 an den Abluftkanal 240 wird diese somit zur Ausbauelektrode. Dies entspricht einer übereinander liegenden Anordnung von Ein- und Ausbauelektrode. Dieses Ausführungsbeispiel ist in Figur 9 dargestellt, welches ansonsten im Wesentlichen dem Ausführungsbeispiel gemäß Figur 8 entspricht, so dass auf die obige Beschreibung dieser Figur verwiesen werden kann. Dabei wird, wie in Figur 9 dargestellt, der Abluftkanal 240 vorzugsweise unterhalb der Reduzierelektrode 510 angeordnet und mit dem Gaspufferraum 814 kombiniert.

## Patentansprüche

1. Sensorelement (210) zur Bestimmung mindestens einer physikalischen Eigenschaft eines Gasgemischs in mindestens einem Gasraum (212), insbesondere zur Bestimmung einer Sauerstoflkonzentration eines Abgases einer Brennkraftmaschine, aufweisend mindestens eine erste Elektrode (218; 219), mindestens eine zweite Elektrode (216; 215) und mindestens einen die mindestens eine erste Elektrode (218; 219) und die mindestens eine zweite, Elektrode (216; 215) verbindenden Festelektrolyten (214), wobei die mindestens eine erste Elektrode (218; 219) und die mindestens eine zweite Elektrode (216; 215) innerhalb des Sensorelements (210) angeordnet sind und die Pumpkathode und die Pumpanode einer Pumpzelle bilden und dass die mindestens eine zweite Elektrode (216; 215) über mindestens einen Abluftkanal (240) mit mindestens einen Referenzgasraum (242) verbunden ist, wobei der mindestens eine Abluftkanal (240) mindestens ein poröses Füllelement (244) aufweist, **dadurch gekennzeichnet, dass** der Grenzstrom der mindestens einen zweiten Elektrode (216; 215) kleiner ist als der Grenzstrom der mindestens einen ersten Elektrode (218; 219)

2. Sensorelement (210) gemäß dem vorhergehenden Anspruch, **dadurch gekennzeichnet, dass** der mindestens eine Abluftkanal (240) mindestens ein poröses Füllelement (244) auf Al₂O₃-Basis aufweist.

3. Sensorelement (210) gemäß einem der vorhergehenden Ansprüche, **dadurch gekennzeichnet, dass** die mindestens eine erste Elektrode (218; 219) durch mindestens eine Diffusionsbarriere (230) von dem mindestens einen Gasraum (212) getrennt ist.

4. Sensorelement (210) gemäß einem der vorhergehenden Ansprüche, **dadurch gekennzeichnet, dass** der Grenzstrom der mindestens einen zweiten Elektrode (216; 215) kleiner ist als 1/50 des Grenzstroms der mindestens einen ersten Elektrode (218; 219), bevorzugt kleiner als 1/100.

5. Sensorelement (210) gemäß einem der vorhergehenden Ansprüche, **dadurch gekennzeichnet, dass** der mindestens eine Abluftkanal (240) mindestens eine der folgenden Eigenschaften aufweist:
- der mindestens eine Abluftkanal (240) weist eine rechteckige Querschnittsfläche auf;
- der mindestens eine Abluftkanal (240) weist eine Länge im Bereich von 5 mm bis 60 mm, vorzugsweise im Bereich von 35 mm bis 60 mm auf;
- der mindestens eine Abluftkanal (240) weist eine Querschnittsfläche im Bereich von 5·10⁻³ mm² bis 240·10⁻³ mm, vorzugsweise von 20·10⁻³ mm² bis 120·10⁻¹³ mm² auf.

6. Sensorelement (210) gemäß einem der vorhergehenden Ansprüche, mit einem dem mindestens einen Gasraum (212) zugewandten Festelektrolyten (214) mit auf der dem mindestens einen Gasraum (212) abgewandten Seite des Festelektrolyten (214) nebeneinander liegend angeordneten, den Festelektrolyten (214) kontaktierenden zweiten Elektrode (216; 215) und ersten Elektrode (218; 219), **gekennzeichnet durch** einen Schichtaufbau mit mindestens einem der folgenden Merkmale:
- die erste Elektrode (218; 219) und die zweite Elektrode (216; 215) sind **durch** im Wesentlichen parallel zum Festelektrolyten (214) angeordnete Zuleitungen (232, 246) kontaktiert, wobei die Zuleitungen (232, 246) im Wesentlichen übereinander angeordnet sind und wobei die Zuleitungen (232, 246) **durch** den mindestens einen Abluftkanal (240) und vorzugsweise **durch** das mindestens eine poröse Füllelement (244) gegeneinander isoliert sind;
- die erste Elektrode (218; 219) und die zweite Elektrode (216; 215) sind **durch** im Wesentlichen parallel zum Festelektrolyten (214) angeordnete Zuleitungen (232, 246) kontaktiert, wobei die Zuleitungen (232, 246) im Wesentlichen nebeneinander liegend angeordnet sind und wobei die Zuleitungen (232, 246) **durch** den mindestens einen Abluftkanal (240) und vorzugsweise **durch** das mindestens eine poröse Füllelement (244) gegeneinander isoliert sind;
- in dem Festelektrolyten (214) ist mindestens ein Gaszutrittsloch (228) vorgesehen zur Verbindung der ersten Elektrode (218; 219) mit dem mindestens einen Gasraum (212);
- mindestens ein zweiter Elektrodenhohlraum (238) ist über und/oder unter der zweiten Elektrode (216; 215) vorgesehen;
- mindestens ein erster Elektrodenhohlraum (226) ist über und/oder unter der ersten Elektrode (218; 219) vorgesehen;
- unterhalb der ersten Elektrode (218; 219) und der zweiten Elektrode (216; 215) ist mindestens ein zweiter Festelektrolyt (220) vorgesehen, wobei die erste Elektrode (218; 219) und/oder die zweite Elektrode (216; 215) den mindestens einen zweiten Festelektrolyten (220) kontaktieren;
- unterhalb der ersten Elektrode (218; 219) und der zweiten Elektrode (216; 215) ist mindestens ein zweiter Festelektrolyt (220) vorgesehen, wobei die erste Elektrode (218; 219) mindestens eine erste, den Festelektrolyten (214) kontaktierende Teilelektrode (222) und mindestens eine zweite, den mindestens einen zweiten Festelektrolyten (220) kontaktierende Teilelektrode (224) aufweist, wobei die mindestens eine erste Teilelektrode (222) und die mindestens eine zweite Teilelektrode (224) elektrisch leitend verbunden sind und wobei vorzugsweise zwischen der mindestens einen ersten Teilelektrode (222) und der mindestens einen zweiten Teilelektrode (224) mindestens ein erster Elektrodenhohlraum (226) vorgesehen ist;
- unterhalb der ersten Elektrode (218; 219) und der zweiten Elektrode (216; 215) ist mindestens ein zweiter Festelektrolyt (220) vorgesehen, wobei die zweite Elektrode (216; 215) mindestens eine erste, den Festelektrolyten (214) kontaktierende Teilelektrode (310) und mindestens eine zweite, den mindestens einen zweiten Festelektrolyten (220) kontaktierende Teilelektrode (312) aufweist, wobei die mindestens eine erste Teilelektrode (310) und die mindestens eine zweite Teilelektrode (312) elektrisch leitend verbunden sind und wobei vorzugsweise zwischen der mindestens einen ersten Teilelektrode (310) und der mindestens einen zweiten Teilelektrode (312) mindestens ein zweiter Elektrodenhohlraum (238) vorgesehen ist;
- das Sensorelement (210) weist weiterhin mindestens ein Heizelement (252) auf.

7. Sensorelement (210) gemäß einem der vorhergehenden Ansprüche, **dadurch gekennzeichnet, dass** weiterhin mindestens eine den mindestens einen Festelektrolyten (214) kontaktierende Reduzierelektrode (510) vorgesehen ist, wobei die mindestens eine Reduzierelektrode (510) in einer Schichtebene angeordnet ist, die nicht einer Schichtebene entspricht, in der die mindestens eine erste Elektrode (218; 219) und die mindestens eine zweite Elektrode (216; 215) angeordnet sind.

8. Sensorelement (210) gemäß dem vorhergehenden Anspruch, **dadurch gekennzeichnet, dass** eine senkrechte Projektion der mindestens einen Reduzierelektrode (510) in eine Schichtebene, in der die mindestens eine erste Elektrode (218; 219) und/oder die mindestens eine zweite Elektrode (216; 215) angeordnet ist, einen Überlapp mit der mindestens einen ersten Elektrode (218; 219) und/oder der mindestens einen zweiten Elektrode (216; 215) aufweist.

9. Sensorelement (210) gemäß dem vorhergehenden Anspruch, **dadurch gekennzeichnet, dass** die senkrechte Projektion der mindestens einen Reduzierelektrode (510) in die Schichtebene, in der die mindestens eine erste Elektrode (218; 219) und/oder die mindestens eine zweite Elektrode (216; 215) angeordnet ist, die mindestens eine erste Elektrode (218; 219) und/oder die mindestens eine zweite Elektrode (216; 215) überdeckt.

10. Sensorelement (210) gemäß einem der Ansprüche 7-9, **dadurch gekennzeichnet, dass** bei Anlegen einer Pumpspannung zwischen die mindestens eine erste Elektrode (218; 219) und die mindestens eine zweite Elektrode (216; 215) ein Ionenstrom (512) durch den mindestens einen Festelektrolyten (214) von der mindestens einen zweiten Elektrode (216; 215) zur mindestens einen Reduzierelektrode (510) und von der mindestens einen Reduzierelektrode (510) zur mindestens einen ersten Elektrode (218; 219) fließt oder umgekehrt.

11. Sensorelement (210) gemäß einem der Ansprüche 7-10, **dadurch gekennzeichnet, dass** die mindestens eine Reduzierelektrode (510) als nicht-kontaktierte Elektrode ausgestaltet ist.

12. Sensorelement (210) gemäß einem der Ansprüche 7-11, **dadurch gekennzeichnet, dass** die mindestens eine Reduzierelektrode (510) in einer tiefer liegenden Schichtebene angeordnet ist als die mindestens eine erste Elektrode (218; 219) und die mindestens eine zweite Elektrode (216; 215).

13. Sensorelement (210) gemäß einem der Ansprüche 7-12, **dadurch gekennzeichnet, dass** die mindestens eine Reduzierelektrode (510) zwischen mindestens einem Heizelement (252) und dem mindestens einen Festelektrolyten (214) angeordnet ist.

14. Sensorelement (210) gemäß einem der Ansprüche 7-13, **dadurch gekennzeichnet, dass** die mindestens eine Reduzierelektrode (510) in Verbindung steht mit mindestens einem Gaspufferraum (814) zur Zwischenspeicherung von Gas.

15. Sensorelement (210) gemäß einem der Ansprüche 7-14, **dadurch gekennzeichnet, dass** die mindestens eine Reduzierelektrode (510) auf einer dem mindestens einen Gasraum (212) zugewandten Seite des mindestens einen Festelektrolyten (214) angeordnet ist, wobei vorzugsweise die mindestens eine Reduzierelektrode (510) von dem mindestens einen Gasraum (212) durch mindestens eine Schutzschicht (610) getrennt ist.

16. Verfahren zur Bestimmung mindestens einer physikalischen Eigenschaft eines Gasgemischs in mindestens einem Gasraum (212), insbesondere zur Bestimmung einer Sauerstoffkonzentration eines Abgases einer Brennkraftmaschine, unter Verwendung eines Sensorelements (210) gemäß einem der vorhergehenden Ansprüche, **dadurch gekennzeichnet, dass** zwischen die mindestens eine zweite Elektrode (216; 215) und die mindestens eine erste Elektrode (218; 219) eine Pumpspannung angelegt wird, wobei mindestens ein Pumpstrom zwischen der mindestens einen ersten Elektrode (118) und der mindestens einen zweiten Elektrode (116) gemessen wird.

17. Verfahren gemäß dem vorhergehenden Anspruch, **dadurch gekennzeichnet, dass** eine Pumpspannung zwischen 100 mV und 1,0 V, vorzugsweise zwischen 300 mV und 800 mV und besonders bevorzugt zwischen 600 mV und 700 mV verwendet wird.

18. Verfahren gemäß einem der beiden vorhergehenden Ansprüche, **dadurch gekennzeichnet, dass** die mindestens eine erste Elektrode (118) als Pumpkathode geschaltet wird, wohingegen die mindestens eine zweite Elektrode (116) als Pumpanode geschaltet wird.

19. Verfahren zur Herstellung eines Sensorelements (210) gemäß einem der Ansprüche 7-15, **dadurch gekennzeichnet, dass** mindestens ein Innenwiderstand des mindestens einen Sensorelements (210) dadurch eingestellt wird, dass mindestens eine Form und/oder mindestens eine Größe der mindestens einen Reduzierelektrode (510) mittels mindestens eines Schneidverfahrens und/oder mindestens eines Ablationsverfahrens angepasst wird, insbesondere mittels eines Laserschneidverfahrens und/oder eines Laserablationsverfahrens.

## Claims

1. Sensor element (210) for determining at least one physical property of a gas mixture in at least one gas chamber (212), in particular for determining an oxygen concentration of an exhaust gas of an internal combustion engine, having at least one first electrode (218; 219), at least one second electrode (216; 215) and at least one solid electrolyte (214), connecting the at least one first electrode (218; 219) and the at least one second electrode (216; 215), wherein the at least one first electrode (218; 219) and the at least one second electrode (216; 215) are arranged within the sensor element (210) and form the pumping cathode and the pumping anode of a pumping cell and wherein the at least one second electrode (216; 215) is connected by way of at least one air-extractor channel (240) to at least one reference gas chamber (242), the at least one air-extractor channel (240) having at least one porous filling element (244), **characterized in that** the limit current of the at least one second electrode (216; 215) is lower than the limit current of the at least one first electrode (218; 219).

2. Sensor element (210) according to the preceding claim, **characterized in that** the at least one air-extractor channel (240) has at least one porous filling element (244) which is based on Al₂O₃.

3. Sensor element (210) according to one of the preceding claims, **characterized in that** the at least one first electrode (218; 219) is separated from the at least one gas chamber (212) by at least one diffusion barrier (230).

4. Sensor element (210) according to one of the preceding claims, **characterized in that** the limit current of the at least one second electrode (216; 215) is lower than 1/50 of the limit current of the at least one first electrode (218; 219), preferably lower than 1/100.

5. Sensor element (210) according to one of the preceding claims, **characterized in that** the at least one air-extractor channel (240) has at least one of the following properties:
- the at least one air-extractor channel (240) has a rectangular cross-sectional area;
- the at least one air-extractor channel (240) has a length in the range from 5 mm to 60 mm, preferably in the range from 35 mm to 60 mm;
- the at least one air-extractor channel (240) has a cross-sectional area in the range from 5·10⁻³ mm² to 240·10⁻³ mm², preferably from 20·10⁻³ mm² to 120·10⁻³ mm².

6. Sensor element (210) according to one of the preceding claims, with a solid electrolyte (214), facing the at least one gas chamber (212), with a second electrode (216; 215) and a first electrode (218; 219), arranged lying next to one another on the side of the solid electrolyte (214) that is facing away from the at least one gas chamber (212) and contacting the solid electrolyte (214), **characterized by** a layer structure with at least one of the following features:
- the first electrode (218; 219) and the second electrode (216; 215) are contacted by leads (232, 246) arranged substantially parallel to the solid electrolyte (214), the leads (232, 246) being arranged substantially one on top of the other and the leads (232, 246) being insulated from one another by the at least one air-extractor channel (240) and preferably by the at least one porous filling element (244);
- the first electrode (218; 219) and the second electrode (216; 215) are contacted by leads (232, 246) arranged substantially parallel to the solid electrolyte (214), the leads (232, 246) being arranged substantially one next to the other and the leads (232, 246) being insulated from one another by the at least one air-extractor channel (240) and preferably by the at least one porous filling element (244);
- at least one gas access hole (228) is provided in the solid electrolyte (214) so as to connect the first electrode (218; 219) to the at least one gas chamber (212);
- at least one second electrode cavity (238) is provided over and/or under the second electrode (216; 215);
- at least one first electrode cavity (226) is provided over and/or under the first electrode (218; 219);
- at least one second solid electrolyte (220) is provided under the first electrode (218; 219) and the second electrode (216; 215), the first electrode (218; 219) and/or the second electrode (216; 215) contacting the at least one second solid electrolyte (220);
- at least one second solid electrolyte (220) is provided under the first electrode (218; 219) and the second electrode (216; 215), the first electrode (218; 219) having at least one first partial electrode (222) contacting the solid electrolyte (214) and at least one second partial electrode (224) contacting the at least one second solid electrolyte (220), the at least one first partial electrode (222) and the at least one second partial electrode (224) being connected in an electrically conducting manner and at least one first electrode cavity (226) preferably being provided between the at least one first partial electrode (222) and the at least one second partial electrode (224);
- at least one second solid electrolyte (220) is provided under the first electrode (218; 219) and the second electrode (216; 215), the second electrode (216; 215) having at least one first partial electrode (310) contacting the solid electrolyte (214) and at least one second partial electrode (312) contacting the at least one second solid electrolyte (220), the at least one first partial electrode (310) and the at least one second partial electrode (312) being connected in an electrically conducting manner and at least one second electrode cavity (238) preferably being provided between the at least one first partial electrode (310) and the at least one second partial electrode (312);
- the sensor element (210) also has at least one heating element (252).

7. Sensor element (210) according to one of the preceding claims, **characterized in that** at least one reducing electrode (510), contacting the at least one solid electrolyte (214), is also provided, the at least one reducing electrode (510) being arranged in a layer plane which does not coincide with a layer plane in which the at least one first electrode (218; 219) and the at least one second electrode (216; 215) are arranged.

8. Sensor element (210) according to the preceding claim, **characterized in that** a perpendicular projection of the at least one reducing electrode (510) into a layer plane in which the at least one first electrode (218; 219) and/or the at least one second electrode (216; 215) is arranged has an overlap with the at least one first electrode (218; 219) and/or the at least one second electrode (216; 215).

9. Sensor element (210) according to the preceding claim, **characterized in that** the perpendicular projection of the at least one reducing electrode (510) into the layer plane in which the at least one first electrode (218; 219) and/or the at least one second electrode (216; 215) is arranged covers the at least one first electrode (218; 219) and/or the at least one second electrode (216; 215).

10. Sensor element (210) according to one of Claims 7-9, **characterized in that**, when a pumping voltage is applied between the at least one first electrode (218; 219) and the at least one second electrode (216; 215), an ion current (512) flows through the at least one solid electrolyte (214) from the at least one second electrode (216; 215) to the at least one reducing element (510) and from the at least one reducing electrode (510) to the at least one first electrode (218; 219), or vice versa.

11. Sensor element (210) according to one of Claims 7-10, **characterized in that** the at least one reducing electrode (510) is designed as a non-contacted electrode.

12. Sensor element (210) according to one of Claims 7-11, **characterized in that** the at least one reducing electrode (510) is arranged in a lower-lying layer plane than the at least one first electrode (218; 219) and the at least one second electrode (216; 215).

13. Sensor element (210) according to one of Claims 7-12, **characterized in that** the at least one reducing electrode (510) is arranged between at least one heating element (252) and the at least one solid electrolyte (214).

14. Sensor element (210) according to one of Claims 7-13, **characterized in that** the at least one reducing electrode (510) is in connection with at least one gas buffer space (814) for intermediately storing gas.

15. Sensor element (210) according to one of Claims 7-14, **characterized in that** the at least one reducing electrode (510) is arranged on a side of the at least one solid electrolyte (214) that is facing the at least one gas chamber (212), the at least one reducing electrode (510) preferably being separated from the at least one gas chamber (212) by at least one protective layer (610).

16. Method for determining at least one physical property of a gas mixture in at least one gas chamber (212), in particular for determining an oxygen concentration of an exhaust gas of an internal combustion engine, using a sensor element (210) according to one of the preceding claims, **characterized in that** a pumping voltage is applied between the at least one second electrode (216; 215) and the at least one first electrode (218; 219), at least one pumping current between the at least one first electrode (118) and the at least one second electrode (116) being measured.

17. Method according to the preceding claim, **characterized in that** a pumping voltage of between 100 mV and 1.0 V, preferably between 300 mV and 800 mV and particularly preferably between 600 mV and 700 mV, is used.

18. Method according to either of the two preceding claims, **characterized in that** the at least one first electrode (118) is connected as a pumping cathode, whereas the at least one second electrode (116) is connected as a pumping anode.

19. Method for producing a sensor element (210) according to one of Claims 7-15, **characterized in that** at least one internal resistance of the at least one sensor element (210) is set by adapting at least a form and/or at least a size of the at least one reducing electrode (510) by means of at least one cutting process and/or at least one ablation process, in particular by means of a laser cutting process and/or a laser ablation process.

## Revendications

1. Elément de détection (210) destiné à déterminer au moins une propriété physique d'un mélange de gaz dans au moins un espace (212) pour gaz, et en particulier pour déterminer la concentration en oxygène d'un gaz d'échappement d'un moteur à combustion interne, l'élément de détection présentant au moins une première électrode (218; 219), au moins une deuxième électrode (216; 215) et au moins un électrolyte solide (214) qui relie la ou les premières électrodes (218; 219) à la ou aux deuxièmes électrodes (216; 215),
la ou les premières électrodes (218; 219) et la ou les deuxièmes électrodes (216; 215) étant disposées à l'intérieur de l'élément de détection (210) et formant la cathode de pompage et l'anode de pompage d'une cellule de pompage,
la ou les deuxièmes électrodes (216; 215) étant reliées par au moins un canal d'évacuation (240) à au moins un espace (242) de gaz de référence,
le ou les canaux (240) d'évacuation d'air présentant au moins un élément poreux de charge (244), **caractérisé en ce que**
le courant limite de la ou des deuxièmes électrodes (216; 215) est inférieur au courant limite de la ou des premières électrodes (218; 219).

2. Elément de détection (210) selon la revendication précédente, **caractérisé en ce que** le ou les canaux (240) d'évacuation d'air présentent au moins un élément poreux de charge (244) à base d'Al₂O₃.

3. Elément de détection (210) selon l'une des revendications précédentes, **caractérisé en ce que** la ou les premières électrodes (218; 219) sont séparées du ou des espaces (212) pour gaz par au moins une barrière (230) à la diffusion.

4. Elément de détection (210) selon l'une des revendications précédentes, **caractérisé en ce que** le courant limite de la ou des deuxièmes électrodes (216; 215) est inférieur à 1/50 et de préférence inférieur à 1/100 du courant limite de la ou des premières électrodes (218; 219).

5. Elément de détection (210) selon l'une des revendications précédentes, **caractérisé en ce que** le ou les canaux (240) d'évacuation d'air présentent au moins l'une des propriétés suivantes :
- le ou les canaux (240) d'évacuation d'air présentent une section transversale rectangulaire,
- le ou les canaux (240) d'évacuation d'air présentent une longueur de l'ordre de 5 mm à 60 mm et de préférence de l'ordre de 35 mm à 60 mm et
- le ou les canaux (240) d'évacuation d'air présentent une section transversale d'une superficie de l'ordre de 5.10⁻³ mm² à 240.10⁻³ mm² et de préférence de 20.10⁻³ mm² à 120.10⁻³ mm².

6. Elément de détection (210) selon l'une des revendications précédentes, avec un électrolyte solide (214) tourné vers le ou les espaces (212) pour gaz et des deuxièmes électrodes (216; 215) et des premières électrodes (218; 219) en contact avec l'électrolyte solide (214) et disposées l'une à côté de l'autre sur le côté de l'électrolyte solide (214) non tourné vers le ou les espaces (212) pour gaz,
**caractérisé en ce que**
il est doté d'une structure stratifiée qui présente au moins l'une des caractéristiques suivantes :
- la première électrode (218; 219) et la deuxième électrode (216; 215) sont mises en contact par des conducteurs (232, 246) disposés essentiellement en parallèle à l'électrolyte solide (214), les conducteurs (232, 346) étant disposés essentiellement l'un au-dessus de l'autre et les conducteurs (232, 346) étant isolés l'un par rapport à l'autre par le ou les canaux (240) d'évacuation d'air et de préférence par le ou les éléments poreux de charge (244),
- la première électrode (218; 219) et la deuxième électrode (216; 215) sont mises en contact par des conducteurs (232, 246) disposés essentiellement en parallèle à l'électrolyte solide (214), les conducteurs (232, 346) étant disposés essentiellement l'un au-dessus de l'autre et les conducteurs (232, 246) étant isolés l'un de l'autre par le ou les canaux (240) d'évacuation d'air et de préférence par le ou les éléments poreux de charge (244),
- au moins un trou (228) d'amenée d'air est prévu dans l'électrolyte solide (214) pour relier la première électrode (218; 219) à l'espace ou aux espaces (212) pour gaz,
- au moins une deuxième cavité (238) d'électrode est prévue au-dessus et/ou en dessous de la deuxième électrode (216; 215),
- au moins une première cavité (226) d'électrode est prévue au-dessus et/ou en dessous de la première électrode (218; 219),
- au moins un deuxième électrolyte solide (220) est prévu en dessous de la première électrode (218; 219) et de la deuxième électrode (216; 215), la première électrode (218; 219) et/ou la deuxième électrode (216; 215) étant en contact avec le ou les deuxièmes électrolytes solides (220),
- au moins un deuxième électrolyte solide (220) est prévu en dessous de la première électrode (218; 219) et de la deuxième électrode (216; 215), la première électrode (218; 219) présentant au moins une première électrode partielle (222) en contact avec l'électrolyte solide (214) et au moins une deuxième électrode partielle (224) en contact avec le ou les deuxièmes électrolytes solides (220), la ou les premières électrodes partielles (222) et la ou les deuxièmes électrodes partielles (224) étant reliées de manière électriquement conductrice et au moins une première cavité (226) d'électrode étant prévue de préférence entre la ou les premières électrodes partielles (222) et la ou les deuxièmes électrodes partielles (224),
- au moins un deuxième électrolyte solide (220) est prévu en dessous de la première électrode (218; 219) et de la deuxième électrode (216; 215), la deuxième électrode (216; 215) présentant au moins une première électrode partielle (310) en contact avec l'électrolyte solide (214) et au moins une deuxième électrode partielle (312) en contact avec le ou les deuxièmes électrolytes solides (220), la ou les premières électrodes partielles (310) et la ou les deuxièmes électrodes partielles (312) étant reliées de manière électriquement conductrice et au moins une deuxième cavité d'électrode (238) étant prévue de préférence entre la ou les premières électrodes partielles (310) et la ou les deuxièmes électrodes partielles (312), et
- l'élément de détection (210) présente en outre au moins un élément chauffant (252).

7. Elément de détection (210) selon l'une des revendications précédentes, **caractérisé en ce qu'**au moins une électrode réductrice (510) en contact avec le ou les électrolytes solides (214) est en outre prévue, la ou les électrodes réductrices (510) étant disposées dans un plan de couche qui ne correspond pas au plan de couche dans lequel la ou les premières électrodes (218; 219) et la ou les deuxièmes électrodes (216; 215) sont disposées.

8. Elément de détection (210) selon la revendication précédente, **caractérisé en ce qu'**une projection perpendiculaire de la ou des électrodes réductrices (510) dans un plan de couche dans lequel la ou les premières électrodes (218; 219) et/ou la ou les deuxièmes électrodes (216; 215) sont disposées présente une superposition avec la ou les premières électrodes (218; 219) et/ou la ou les deuxièmes électrodes (216; 215 ) .

9. Elément de détection (210) selon la revendication précédente, **caractérisé en ce que** la projection perpendiculaire de la ou des électrodes réductrices (510) dans le plan de couche dans lequel la ou les premières électrodes (218; 219) et/ou la ou les deuxièmes électrodes (216; 215) sont disposées recouvre la ou les premières électrodes (218; 219) et/ou la ou les deuxièmes électrodes (216; 215).

10. Elément de détection (210) selon l'une des revendications 7 à 9, **caractérisé en ce que** lorsqu'une tension de pompage est appliquée entre la ou les premières électrodes (218; 219) et la ou les deuxièmes électrodes (216; 215), un courant d'ions (512) s'écoule dans le ou les électrolytes solides (214) depuis la ou les deuxièmes électrodes (216; 215) vers la ou les électrodes réductrices (510) et depuis la ou les électrodes réductrices (510) vers la ou les premières électrodes (218; 219), ou inversement.

11. Elément de détection (210) selon l'une des revendications 7 à 10, **caractérisé en ce que** la ou les électrodes réductrices (510) sont configurées comme électrodes sans contact.

12. Elément de détection (210) selon l'une des revendications 7 à 11, **caractérisé en ce que** la ou les électrodes réductrices (510) sont disposées dans un plan de couche plus bas que la ou les premières électrodes (218; 219) et que la ou les deuxièmes électrodes (216; 215).

13. Elément de détection (210) selon l'une des revendications 7 à 12, **caractérisé en ce que** la ou les électrodes réductrices (510) sont disposées entre au moins un élément chauffant (252) et le ou les électrolytes solides (214).

14. Elément de détection (210) selon l'une des revendications 7 à 13, **caractérisé en ce que** la ou les électrodes réductrices (510) communiquent avec au moins un espace (814) de tampon pour le gaz qui conserve temporairement le gaz.

15. Elément de détection (210) selon l'une des revendications 7 à 14, **caractérisé en ce que** la ou les électrodes réductrices (510) sont disposées sur un côté du ou des électrolytes solides (214) non tourné vers le ou les espaces (212) pour gaz, la ou les électrodes réductrices (510) étant de préférence séparées du ou des espaces (212) pour gaz par au moins une couche de protection (610).

16. Procédé de détermination d'au moins une propriété physique d'un mélange de gaz dans au moins un espace (212) pour gaz, et en particulier de détermination de la concentration en oxygène de gaz d'échappement d'un moteur à combustion interne, par recours à un élément de détection (210) selon l'une des revendications précédentes,
**caractérisé en ce que**
une tension de pompage est appliquée entre la ou les deuxièmes électrodes (216; 215) et la ou les premières électrodes (218; 219), au moins un courant de pompage étant mesuré entre la ou les premières électrodes (118) et la ou les deuxièmes électrodes (116).

17. Procédé selon la revendication précédente, **caractérisé en ce qu'**il recourt à une tension de pompage comprise entre 100 mV et 1,0 V, de préférence entre 300 mV et 800 mV et de façon particulièrement préférable entre 600 mV et 700 mV.

18. Procédé selon l'une des deux revendications qui précèdent, **caractérisé en ce que** la ou les premières électrodes (118) sont branchées comme cathodes de pompage et **en ce qu'**en revanche, la ou les deuxièmes électrodes (116) sont raccordées en tant qu'anodes de pompage.

19. Procédé de fabrication d'un élément de détection (210) selon l'une des revendications 7 à 15, **caractérisé en ce qu'**au moins une résistance intérieure du ou des éléments de détection (210) est réglée en adaptant la forme et/ou la taille de la ou des électrodes réductrices (510) au moyen d'au moins une opération de découpe et/ou d'au moins une opération d'ablation, en particulier au moyen d'un procédé de découpe au laser et/ou d'un procédé d'ablation au laser.
